# EUROPEAN PATENT APPLICATION

(11) **EP 4 779 945 A1**
(43) Date of publication of application: **22.07.2026**
(21) Application number: 24881169.7
(22) Date of filing: 07.08.2024
(51) Int. Cl.: H04L 41/14

(54) **METHOD, APPARATUS AND SYSTEM FOR MANAGING DIGITAL TWIN NETWORK**

(30) Priority: 27.10.2023 CN 202311411699
(71) Applicant: HUAWEI TECHNOLOGIES CO., LTD., Shenzhen, Guangdong 518129 (CN)
(72) Inventor: ZHU, Lei, Shenzhen, Guangdong 518129 (CN); LI, Shitao, Shenzhen, Guangdong 518129 (CN); TIAN, Zhuoyuan, Shenzhen, Guangdong 518129 (CN)
(74) Representative: Pfenning, Meinig & Partner mbB
(86) International application number: PCT/CN2024/110473
(87) International publication number: WO 2025/086800

(57) **Abstract**

Embodiments of this application provide a method and a system for managing a digital twin network, and an apparatus, so that the digital twin network can implement synchronous data interaction with a physical network without using standardly defined data and a corresponding interface, avoiding an impact of the digital twin network on a function of the physical network. The method includes: A first device receives a first create request, where the first create request is used to request to create a digital twin network ontology in a digital twin network corresponding to a physical network, and the first device manages the physical network and the digital twin network; and the first device creates the digital twin network ontology in the digital twin network based on the first create request.

## Description

This application claims priority to Chinese Patent Application No. 202311411699.6, filed with the China National Intellectual Property Administration on October 27, 2023 and entitled "METHOD AND SYSTEM FOR MANAGING DIGITAL TWIN NETWORK, AND APPARATUS", which is incorporated herein by reference in its entirety.

### TECHNICAL FIELD

Embodiments of this application relate to the field of digital twin networks, and more specifically, to a method and a system for managing a digital twin network, and an apparatus.

### BACKGROUND

A digital twin, a virtual model of an entity object, spans the lifecycle of the object and uses real-time data sent from a sensor on the object to simulate behavior and monitor an operation.

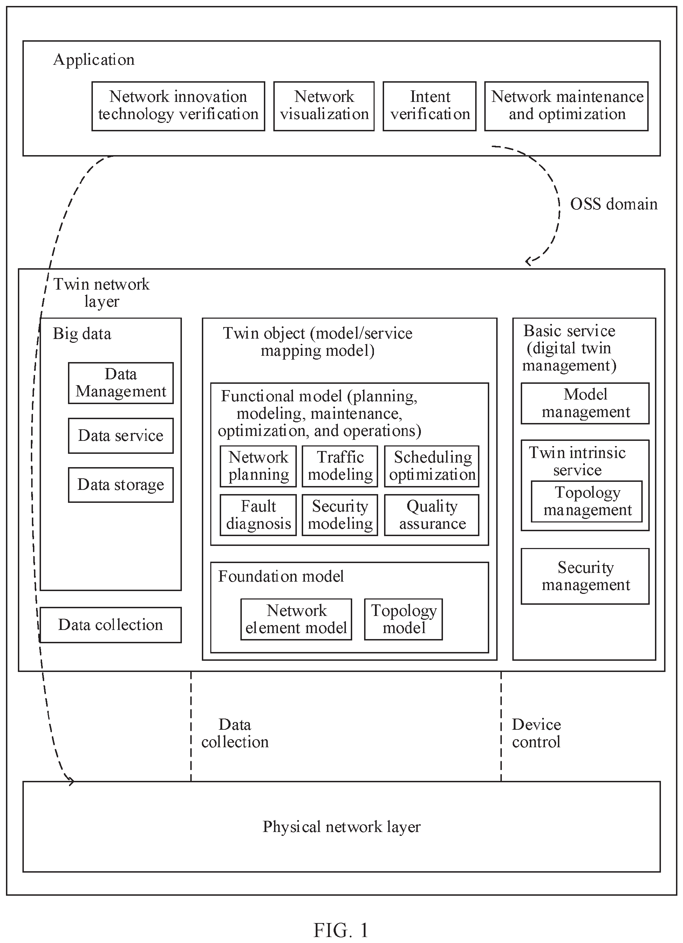

FIG. 1 is a diagram of a network structure of a digital twin network (digital twin network). As shown in FIG. 1, the entire digital twin network is constructed in an operations support system (operations support system, OSS) domain. To implement accurate digital mapping of the digital twin network, a twin network layer of the digital twin network needs to synchronize with a physical network layer. However, implementation of synchronization has an excessively high requirement on a data collection speed and amount, and needs standardly defined data and a corresponding interface, and implementation of a function of a physical network is also affected.

### SUMMARY

Embodiments of this application provide a method and a system for managing a digital twin network, and an apparatus, so that the digital twin network can implement synchronous data interaction with a physical network without using standardly defined data and a corresponding interface, avoiding an impact of the digital twin network on a function of the physical network.

To achieve the foregoing objective, this application uses the following technical solutions.

According to a first aspect, a method for managing a digital twin network is provided. The method may be performed by a first device, or may be performed by a component of the first device, for example, a processor, a chip, or a chip system of the first device, or may be implemented by a logical module or software that can implement all or a part of functions of the first device. For example, the method may be performed by the first device. The method includes: The first device receives a first create request, where the first create request is used to request to create a digital twin network ontology in a digital twin network corresponding to a physical network, and the first device manages the physical network and the digital twin network; and the first device creates the digital twin network ontology in the digital twin network based on the first create request.

In the method for managing a digital twin network provided in this embodiment of this application, the first device creates, based on the first create request of a second device, the digital twin network ontology in the digital twin network corresponding to the physical network. As the first device manages both the physical network and the digital twin network corresponding to the physical network, the digital twin network can implement synchronous data interaction with the physical network without using standardly defined data and a corresponding interface, avoiding an impact of the digital twin network on a function of the physical network.

In this embodiment of this application, a management function of the first device for the physical network and the digital twin network includes at least one of the following: closed-loop management, acquisition of performance and fault alarm information of the digital twin network, an analytics function, and a control function for the digital twin network ontology. In this way, the first device can manage, based on at least one function in the management function, the physical network and the digital twin network corresponding to the physical network.

In a possible implementation, the digital twin network ontology includes a first twin, and the method further includes: The first device receives first control information; and the first device performs an operation on the first twin based on the first control information. In this way, the first device can perform the operation on the first twin based on the first control information.

In this embodiment of this application, the first twin is configured to perform a function of a first application, and the first control information is determined by the first application by performing analytics based on information about the first twin. In this embodiment of this application, when the second device includes an application module, the first control information is obtained by an application module, corresponding to the first application, by performing analytics based on the information about the first twin. In this way, the first device can perform the operation on the first twin based on the first control information that is determined by the application module by performing analytics, and the operation is more targeted and accurate.

In this embodiment of this application, the information about the first twin includes one or more of the following: a network topology, network coverage, energy consumption, traffic, a network performance key performance indicator KPI, and a fault and an alarm.

In a possible implementation, the digital twin network ontology includes a second twin, and the method further includes: The first device receives a first observation request, where the first observation request is used to request visualization information of the second twin, and the visualization information of the second twin is for visually displaying the second twin; and the first device sends the visualization information of the second twin. In this way, the second device can perform visual display based on the visualization information of the second twin, and the user can intuitively observe the visualization information of the second twin.

In this embodiment of this application, an artificial intelligence AI inference function is deployed in the digital twin network ontology; or a management function of the first device for the physical network and the digital twin network includes an analytics function, and the analytics function includes the AI inference function. In this embodiment of this application, as the AI inference function is deployed in the digital twin network ontology, the entire digital twin network has the AI inference function, and performance of some twins can be predicted or inferred.

In this embodiment of this application, the method further includes: The first device receives a second create request, where the second create request is used to request to create an AI inference function instance in the physical network, and an AI inference model deployed on the AI inference function instance is used to output an AI inference result; and the first device creates the AI inference function instance in the physical network based on the second create request. In this embodiment of this application, as the AI inference function is deployed in the physical network, the physical network can have prediction and inference functions, and operations of some network functions can be performed based on a prediction or inference result.

In this embodiment of this application, the digital twin network ontology is configured to obtain the AI inference result from the physical network. In this way, the digital twin network can monitor the AI inference function of the physical network.

In a possible implementation, the digital twin network ontology includes a third twin, and the third twin is associated with the AI inference function.

In this embodiment of this application, the digital twin network ontology includes one of the following at least one twin: a network topology twin, a network coverage twin, an energy consumption twin, a traffic twin, a network performance key performance indicator KPI twin, and a fault and alarm twin.

According to a second aspect, a method for managing a digital twin network is provided. The method may be performed by a second device, or may be performed by a component of the second device, for example, a processor, a chip, or a chip system of the second device, or may be implemented by a logical module or software that can implement all or a part of functions of the second device. For example, the method may be performed by the second device. The method includes: The second device sends a first create request, where the first create request is used to request to create a digital twin network ontology in a digital twin network corresponding to a physical network; and the second device sends first control information, where the first control information indicates an operation performed by a first device on a first twin, and the digital twin network ontology includes the first twin.

In the method for managing a digital twin network provided in this embodiment of this application, the second device sends the first create request to the first device, and the first create request is used to request to create the digital twin network ontology in the digital twin network corresponding to the physical network. As the first device manages both the physical network and the digital twin network corresponding to the physical network, the digital twin network can implement synchronous data interaction with the physical network without using standardly defined data and a corresponding interface, avoiding an impact of the digital twin network on a function of the physical network.

In this embodiment of this application, the first twin is configured to perform a function of a first application, and the first control information is determined by the first application by performing analytics based on information about the first twin. In this embodiment of this application, when the second device includes an application module, the first control information is obtained by an application module, corresponding to the first application, by performing analytics based on the information about the first twin. In this way, the second device can send the first control information to the first device based on the analytics by the application module, and the operation of the first device on the twin is more targeted and accurate.

In this embodiment of this application, the information about the first twin includes one or more of the following: a network topology, network coverage, energy consumption, traffic, a network performance key performance indicator KPI, and a fault and an alarm.

In this embodiment of this application, the method further includes: The second device sends a first observation request, where the first observation request is used to request visualization information of a second twin, and the digital twin network ontology includes the second twin; and the second device receives and displays the visualization information of the second twin. In this way, the second device can perform visual display based on the visualization information of the second twin, and the user can intuitively observe the visualization information of the second twin.

In this embodiment of this application, the method further includes: The second device sends a second create request, where the second create request is used to request to create an artificial intelligence AI inference function instance in the physical network, and an AI inference model deployed on the AI inference function instance is used to output an AI inference result.

In this embodiment of this application, the digital twin network ontology includes a third twin, and the third twin is associated with an AI inference function.

According to a third aspect, a communication apparatus is provided, and is configured to implement the foregoing methods. The communication apparatus may be the first device in the first aspect, or an apparatus included in the first device, for example, a chip. Alternatively, the communication apparatus may be the second device in the second aspect, or an apparatus included in the second device, for example, a chip.

The communication apparatus includes corresponding modules, units, or means (means) for implementing the foregoing methods. The modules, units, or means (means) may be implemented by hardware, software, or hardware executing corresponding software. The hardware or the software includes one or more modules or units corresponding to the foregoing functions.

In some possible designs, the communication apparatus may include a processing module and a communication module. The communication module may include an output module (or a sending module) and an input module (or a receiving module), which are respectively configured to implement functions of an output class (or a sending class) and an input class (or a receiving class) in any one of the foregoing aspects and any possible design of the foregoing aspects. The processing module may be configured to implement a processing function in any one of the foregoing aspects and any possible design of the foregoing aspects.

Optionally, the communication apparatus further includes a storage module, configured to store program instructions and data.

According to a fourth aspect, a communication apparatus is provided, and includes at least one processor, where the processor is configured to run a computer program or instructions, or is configured to enable, through a logic circuit, the communication apparatus to perform the method according to any one of the foregoing aspects. The communication apparatus may be the first device in the first aspect, or an apparatus included in the first device, for example, a chip. Alternatively, the communication apparatus may be the second device in the second aspect, or an apparatus included in the second device, for example, a chip.

In some possible designs, the communication apparatus further includes a memory, configured to store computer instructions and/or a configuration file of the logic circuit. Optionally, the memory and the processor are integrated together, or the memory is independent of the processor.

In a possible design, the communication apparatus further includes a communication interface, configured to input and/or output a signal.

In some possible designs, the communication interface is an interface circuit, and is configured to read and write computer instructions. For example, the interface circuit is configured to: receive computer-executable instructions (where the computer-executable instructions are stored in a memory, and may be directly read from the memory, or may be read via another component), and transmit the computer-executable instructions to the processor.

In some possible designs, the communication interface is configured to communicate with a module outside the communication apparatus.

In some possible designs, the communication apparatus may be a chip system. When the communication apparatus is the chip system, the chip system may include a chip, or may include a chip and another discrete component.

According to a fifth aspect, a communication apparatus is provided, and includes a logic circuit and an interface circuit. The interface circuit is configured to input information and/or output information. The logic circuit is configured to: perform the method according to any one of the foregoing aspects, and process and/or generate the to-be-output information based on the input information. The communication apparatus may be the first device in the first aspect, or an apparatus included in the first device, for example, a chip. Alternatively, the communication apparatus may be the second device in the second aspect, or an apparatus included in the second device, for example, a chip.

It may be understood that when the communication apparatus provided in either the third aspect or the fourth aspect is a chip, a sending action/function above may be understood as outputting information, and a receiving action/function above may be understood as inputting information.

According to a sixth aspect, a computer-readable storage medium is provided. The computer-readable storage medium stores a computer program or instructions. When the computer program is executed or the instructions are executed by a processor, the method according to any one of the foregoing aspects is performed.

According to a seventh aspect, a computer program product is provided. When the computer program product is executed by a processor, the method according to any one of the foregoing aspects is performed.

According to an eighth aspect, a communication apparatus is provided. The communication apparatus includes modules/units configured to perform the method according to the foregoing first aspect or the foregoing second aspect.

According to a ninth aspect, a communication system is provided. The communication system includes the first device according to the foregoing first aspect and the second device according to the foregoing second aspect. The first device and the second device may be implemented as the communication apparatus provided in any one of the third aspect to the fifth aspect.

The first device in the communication system includes a management module, configured to manage a physical network and a digital twin network corresponding to the physical network. The second device in the communication system includes a control module, configured to control the second device to perform the methods according to the foregoing first aspect and the foregoing second aspect. Optionally, the second device in the communication system further includes an observation module, configured to observe at least one twin included in a digital twin network ontology. Optionally, the second device in the communication system further includes an application module, configured to perform analytics based on information about the at least one twin included in the digital twin network ontology, to determine first control information.

For technical effects brought by any design manner of the third aspect to the ninth aspect, refer to technical effects brought by different design manners of the foregoing first aspect or the foregoing second aspect. Details are not described herein again.

### BRIEF DESCRIPTION OF DRAWINGS

FIG. 1 is a diagram of a network structure of a digital twin network;
FIG. 2 is a diagram of an example of a system architecture according to an embodiment of this application;
FIG. 3 is a diagram of an application scenario 1 according to an embodiment of this application;
FIG. 4 is a diagram of an application scenario 2 according to an embodiment of this application;
FIG. 5 is a diagram of a structure of a communication device according to an embodiment of this application;
FIG. 6 is a diagram of an example of a method for managing a digital twin network according to an embodiment of this application;
FIG. 7 is a diagram of an example of a method for managing a digital twin network according to an embodiment of this application;
FIG. 8 is a diagram of an example of a method for managing a digital twin network according to an embodiment of this application;
FIG. 9 is a diagram of an example of a method for managing a digital twin network according to an embodiment of this application;
FIG. 10 is a diagram of an example of a method for managing a digital twin network according to an embodiment of this application;
FIG. 11 is a diagram of an example of a method for managing a digital twin network according to an embodiment of this application;
FIG. 12 is a diagram of an example of a method for managing a digital twin network according to an embodiment of this application;
FIG. 13 is a diagram of an example of a method for managing a digital twin network according to an embodiment of this application;
FIG. 14 is a diagram of an example of a method for managing a digital twin network according to an embodiment of this application; and
FIG. 15 is a diagram of a communication apparatus according to an embodiment of this application.

### DESCRIPTION OF EMBODIMENTS

In the description of this application, unless otherwise specified, "/" indicates that associated objects are in an "or" relationship. For example, A/B may represent A or B. In this application, "and/or" merely describes an association relationship between associated objects and indicates that three relationships may exist. For example, A and/or B may represent three cases: Only A exists, both A and B exist, or only B exists, where A and B may be singular or plural.

In addition, in the description of this application, unless otherwise specified, "a plurality of" means two or more than two. "At least one of the following items (pieces)" or a similar expression thereof indicates any combination of these items, including a single item (piece) or any combination of plural items (pieces). For example, at least one item (piece) of a, b, or c may indicate a, b, c, a and b, a and c, b and c, or a, b, and c, where a, b, and c each may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example" or "for example" indicates giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" mentioned throughout this specification means that particular features, structures, or characteristics related to embodiments are included in at least one embodiment of this application. Therefore, embodiments in the entire specification are not necessarily a same embodiment. In addition, these particular features, structures, or characteristics may be combined in one or more embodiments through any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts of embodiments, mutual reference may be made between embodiments. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The following implementations of this application are not intended to limit the protection scope of this application.

For ease of understanding the technical solutions in embodiments of this application, the following first briefly describes technologies and terms related to this application.

### I. Types of a digital twin.

### 1. Component twin/Assembly twin:

A component twin is a basic unit of a digital twin, and is a smallest functional component example. An assembly twin is roughly the same as the component twin, but the assembly twin is a component of less importance.

### 2. Asset twin:

When two or more component twins work together, an asset twin is formed. The asset twin causes a user to study interaction of these components, create a large quantity of processable performance data, and then convert the data into feasible insights.

### 3. System twin/unit twin:

Further amplified asset twins are a system twin or a unit twin. The system twin or the unit twin can show how different assets are aggregated to form a complete functional system. The system twin causes a user to see interaction between assets, and can cause the user to obtain suggestions on performance optimization.

### 4. Procedure twin:

A procedure twin (macro-level amplification) shows how a system builds an entire production facility through collaborative work. To achieve the highest efficiency, the procedure twin may verify whether a plurality of systems are running synchronously or whether delay of one system affects other systems. In this way, the procedure twin can help a user determine a precise time control solution that eventually affects overall efficiency.

### II. Digital twin network:

A digital twin network is a virtual twin that is created in a digital manner and that is of a physical network entity, and a network system that can interact and perform mapping with the physical network entity in real time. Core elements of the digital twin network are: data, a model, interaction, and mapping. The data is a cornerstone for constructing the digital twin network. A unified data shared warehouse is constructed as a single fact source of the digital twin network, to efficiently store historical and real-time data such as physical network configurations, topologies, statuses, logs, and user services, and provide data support for a network twin. The model is a capability source of the digital twin network. Data models with rich functions can be flexibly combined to create a plurality of model instances to serve various network applications. The mapping is high-fidelity visualized presentation of the physical network entity through the network twin, and is a most typical feature that distinguishes the digital twin network from a network simulation system. The interaction is a key to achieving virtual-physical synchronization. The network twin connects a network service application and the physical network entity through a standard interface, to collect and control physical network information in real time, and provide diagnosis and analytics in a timely manner.

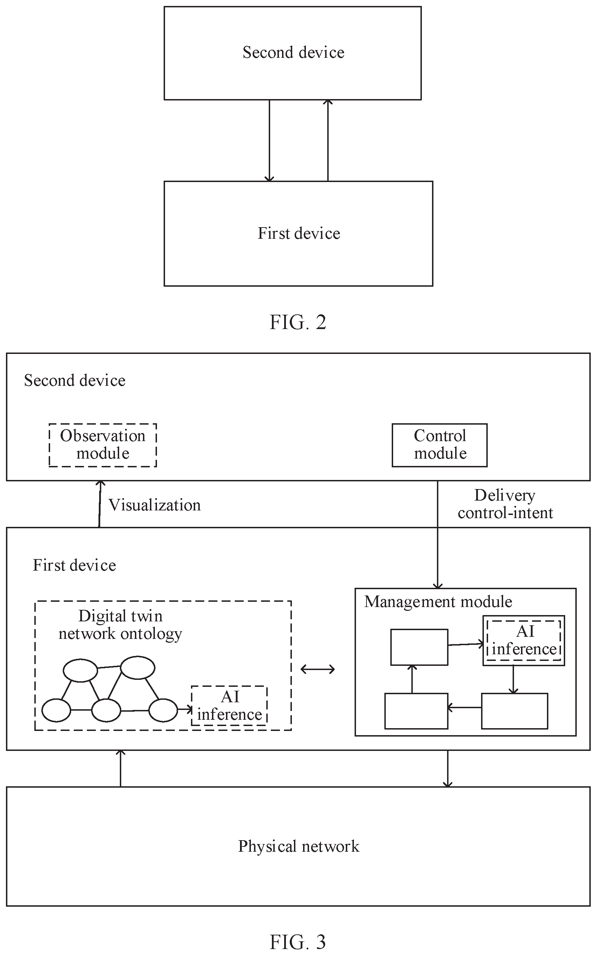

FIG. 2 is a diagram of an example of a system architecture according to an embodiment of this application. As shown in FIG. 2, a system includes a first device and a second device, where the first device manages a physical network and a digital twin network corresponding to the physical network. The second device is configured to send a first create request, where the first create request is used to request to create a digital twin network ontology in the digital twin network corresponding to the physical network. The first device is configured to: receive the first create request, and create the digital twin network ontology in the digital twin network based on the first create request.

It should be noted that the system architecture described in embodiments of this application is intended to describe the technical solutions in embodiments of this application more clearly, and does not constitute limitation on the technical solutions provided in embodiments of this application. A person of ordinary skill in the art may learn that the technical solutions provided in embodiments of this application are also applicable to a similar technical problem as a network architecture evolves and a new service scenario emerges.

Optionally, related functions of the first device or the second device in this application may be implemented by one device, may be jointly implemented by a plurality of devices, or may be implemented by one or more functional modules in one device, or may be implemented by one or more chips, or may be implemented by a system-on-a-chip (system-on-a-chip, SoC) or a chip system. The chip system may include a chip, or may include a chip and another discrete device. This is not specifically limited in embodiments of this application.

It may be understood that the foregoing functions may be a network element in a hardware device, or may be a software function running on dedicated hardware, or may be a combination of hardware and software, or may be a virtualization function instantiated on a platform (for example, a cloud platform).

FIG. 3 is a diagram of an application scenario 1 according to an embodiment of this application. As shown in FIG. 3, a first device includes a management module, configured to manage a physical network and a digital twin network corresponding to the physical network, to cause the first device to perform the method for managing a digital twin network provided in embodiments of this application. A second device includes a control module, configured to control the second device to perform the method for managing a digital twin network provided in embodiments of this application.

Optionally, the second device further includes an observation module, configured to observe at least one twin included in a digital twin network ontology.

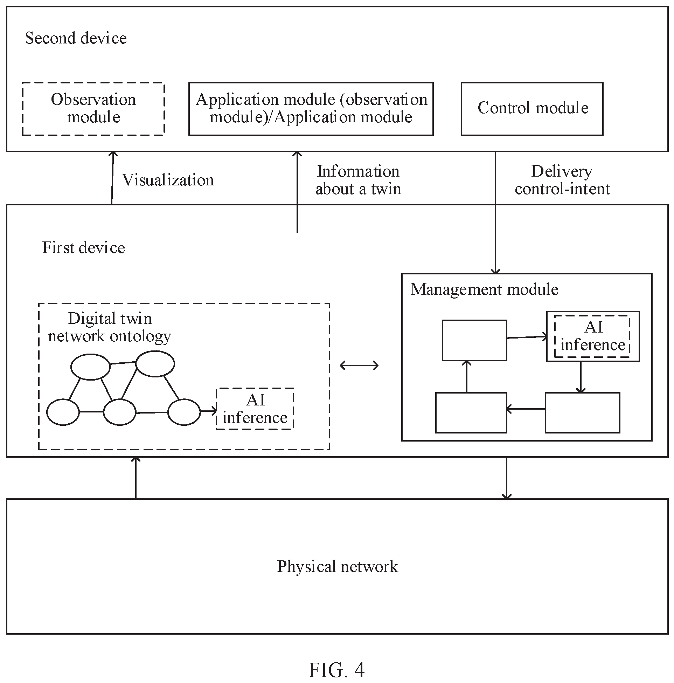

FIG. 4 is a diagram of an application scenario 2 according to an embodiment of this application. As shown in FIG. 4, a first device includes a management module, configured to manage a physical network and a digital twin network corresponding to the physical network, to cause the first device to perform the method for managing a digital twin network provided in embodiments of this application. A second device includes a control module and an application module. The control module is configured to control the second device to perform the method for managing a digital twin network provided in embodiments of this application. The application module is configured to perform analytics based on information about at least one twin included in a digital twin network ontology, to determine first control information.

Optionally, the second device further includes an observation module, configured to observe at least one twin included in the digital twin network ontology.

Alternatively, optionally, the application module includes an observation module, configured to observe at least one twin included in the digital twin network ontology, where the at least one twin is configured to perform a function corresponding to an application (for example, a first application).

Optionally, for the application scenario 1 shown in FIG. 3 and the application scenario 2 shown in FIG. 4, a management function of the management module in embodiments of this application includes at least one of the following: closed-loop management, acquisition of performance and fault alarm information of the digital twin network, an analytics function, and a control function for the digital twin network ontology.

Optionally, for the application scenario 1 shown in FIG. 3 and the application scenario 2 shown in FIG. 4, the management module includes an analytics function, where the analytics function includes an AI inference function; or an AI inference function is deployed in the digital twin network ontology.

Optionally, for the application scenario 1 shown in FIG. 3 and the application scenario 2 shown in FIG. 4, the digital twin network ontology may be deployed on the first device, or may be independently deployed. This is not limited in embodiments of this application.

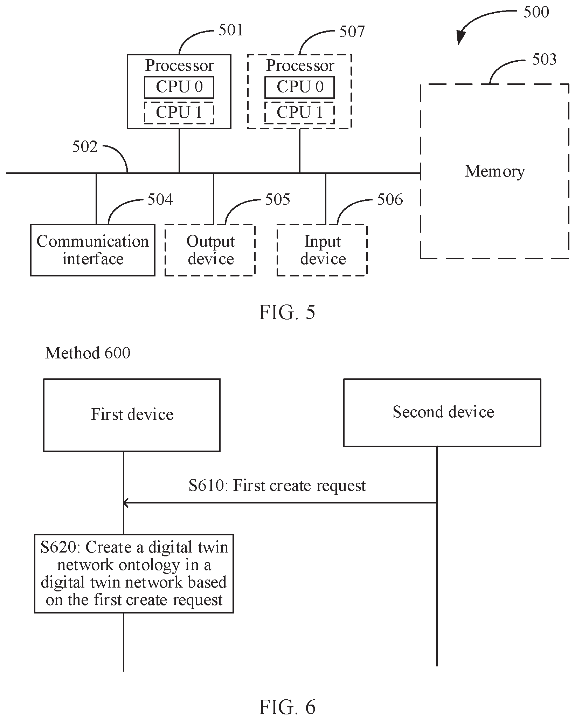

In a possible implementation, related functions of the first device and the second device in embodiments of this application may be implemented by a communication device 500 in FIG. 5. The communication device 500 includes one or more processors 501, a communication line 502, at least one communication interface (FIG. 5 is merely an example in which a communication interface 504 and one processor 501 are included for description), and further, optionally, may include a memory 503.

The processor 501 may be a general-purpose central processing unit (central processing unit, CPU), a microprocessor, an application-specific integrated circuit (application-specific integrated circuit, ASIC), or one or more integrated circuits configured to control execution of programs in the solutions of this application.

The communication line 502 may include a path, configured to connect different components.

The communication interface 504 may be a transceiver module, configured to communicate with another device or another communication network, for example, an Ethernet, a radio access network (radio access network, RAN), a terminal, or a wireless local area network (wireless local area network, WLAN). For example, the transceiver module may be an apparatus, like a transceiver or a transceiver machine. Optionally, the communication interface 504 may be a transceiver circuit or an input/output interface located in the processor 501, and is configured to implement signal input and signal output of the processor.

The memory 503 may be an apparatus with a storage function. For example, the memory 503 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can carry or store expected program code in a form of instructions or a data structure and that can be accessed by a computer, but is not limited thereto. The memory may exist independently, and is connected to the processor through the communication line 502. The memory may alternatively be integrated with the processor.

The memory 503 is configured to store computer-executable instructions for executing the solutions of this application, and the processor 501 controls execution. The processor 501 is configured to execute the computer-executable instructions stored in the memory 503, to implement the method for managing a digital twin network provided in embodiments of this application.

Alternatively, optionally, in this embodiment of this application, the processor 501 may perform functions related to processing in the method for managing a digital twin network provided in the following embodiments of this application. The communication interface 504 is responsible for communicating with another device or another communication network. This is not specifically limited in this embodiment of this application.

Optionally, the computer-executable instructions in embodiments of this application may also be referred to as application program code. This is not specifically limited in embodiments of this application.

During specific implementation, in an embodiment, the processor 501 may include one or more CPUs, for example, a CPU 0 and a CPU 1 in FIG. 5.

During specific implementation, in an embodiment, the communication device 500 may include a plurality of processors, for example, the processor 501 and a processor 507 in FIG. 5. Each of these processors may be a single-core (single-core) processor or may be a multi-core (multi-core) processor. The processor herein may include but is not limited to at least one of the following: various compute devices that run software, such as a central processing unit (central processing unit, CPU), a microprocessor, a digital signal processor (DSP), a microcontroller (microcontroller unit, MCU), or an artificial intelligence processor. Each type of compute device may include one or more cores for executing software instructions to perform an operation or processing.

In a specific implementation, in an embodiment, the communication device 500 may further include an output device 505 and an input device 506. The output device 505 communicates with the processor 501, and may display information in a plurality of manners. For example, the output device 505 may be a liquid crystal display (liquid crystal display, LCD), a light emitting diode (light emitting diode, LED) display device, a cathode ray tube (cathode ray tube, CRT) display device, a projector (projector), or the like. The input device 506 communicates with the processor 501, and may receive user input in a plurality of manners. For example, the input device 506 may be a mouse, a keyboard, a touchscreen device, a sensor device, or the like.

Sometimes, the communication device 500 described above may also be referred to as a communication apparatus, and may be a general-purpose device or a dedicated device. For example, the communication device 500 may be a desktop computer, a portable computer, a network server, a personal digital assistant (personal digital assistant, PDA), a mobile phone, a tablet computer, a wireless terminal device, an embedded device, or a device having a structure similar to that in FIG. 5. A type of the communication device 500 is not limited in embodiments of this application.

In addition, a composition structure shown in FIG. 5 does not constitute a limitation on the communication apparatus. In addition to components shown in FIG. 5, the communication apparatus may include more or fewer components than those shown in the figure, or some components may be combined, or different component arrangements may be used.

With reference to the system architecture provided in FIG. 2, the following describes the method for managing a digital twin network provided in embodiments of this application.

FIG. 6 is a diagram of an example of a method for managing a digital twin network according to an embodiment of this application. The method is described by using interaction between a first device and a second device as an example. Certainly, an entity for executing actions of the first device in the method may further be an apparatus/a module in the first device, for example, a chip, a processor, or a processing unit in the first device; and an entity for executing actions of the second device in the method may further be an apparatus/a module in the second device, for example, a chip, a processor, or a processing unit in the second device. This is not specifically limited in this embodiment of this application. In embodiments of this application, processing performed by a single entity (for example, the first device or the second device) may alternatively be performed by a plurality of execution bodies, and these execution bodies may be logically and/or physically separated. For example, as shown in FIG. 6, the method 600 for managing a digital twin network according to an embodiment of this application includes the following steps.

S610: A second device sends a first create request to a first device. Correspondingly, the first device receives the first create request from the second device.

In this embodiment of this application, the first device may be a device on which an operation and maintenance center (operation and maintenance center, OMC) is deployed, and the second device may be a device on which an OSS is deployed. This is not limited in embodiments of this application.

In this embodiment of this application, the first create request is used to request to create a digital twin network ontology in a digital twin network corresponding to a physical network. For example, the digital twin network ontology may be deployed on the first device, or may be independently deployed. This is not limited in embodiments of this application.

In this embodiment of this application, the first device manages the physical network and the digital twin network corresponding to the physical network. A management function of the first device for the physical network and the digital twin network includes at least one of the following: closed-loop management, acquisition of performance and fault alarm information of the digital twin network, an analytics function, and a control function for the digital twin network ontology. It should be understood that the management function of the first device for the physical network and the digital twin network may be set in combination or separately set. This is not limited in embodiments of this application.

In this embodiment of this application, the closed-loop management may include a closed-loop including four parts: observation, analytics, decision-making, and execution, that is, observation, analytics, decision-making, and execution of a managed digital twin network and a service of the digital twin network.

In this embodiment of this application, the performance of the digital twin network may include, for example, a maximum quantity of sessions, a quantity of quality of service (quality of service, QoS) flows, and the like. This is not limited in this embodiment of this application.

In this embodiment of this application, the fault alarm information may include an instance of an alarm object, time of an alarm event, an alarm type, alarm threshold information, an alarm monitoring parameter, additional information, and the like. This is not limited in this embodiment of this application.

In this embodiment of this application, the analytics function may be provided by, for example, a data management analytics function (management data analytics function, MDAF). The analytics function includes processing and analyzing data related to the digital twin network and the service of the digital twin network, for example, analytics of performance metrics, an alarm, configuration data, network analytics data, and service experience data, to provide statistics or prediction, root cause analytics, and recommendations on operations of the digital twin network and the service of the digital twin network.

In this embodiment of this application, a control function for the digital twin network ontology may include control delivery of an intent, creating a digital twin network ontology, and the like. This is not limited in this embodiment of this application.

In this embodiment of this application, the digital twin network ontology may be, based on a use requirement, synchronized with information about the physical network, or may be virtual simulation of the physical network. The digital twin network ontology may be a virtualized network that is of a real network and that is close to a full physical network, and may include a network node or the like. The digital twin network ontology may correspond to a wireless network, or may correspond to a core network, or may correspond to a network of a combination of a wireless network and a core network. This is not limited in this embodiment of this application.

In this embodiment of this application, the digital twin network ontology may include but is not limited to: digital model information of an external environment, digital model information of a subrack/physical hardware, digital model information of resource information, digital model information of a software function, digital model information of transmission resources, digital model information of a transmission node and traffic of an Internet protocol (Internet protocol, IP), digital model information of network function resources, digital model information of a service node and service traffic, digital model information of a signaling node and node traffic, or another digital model information, a performance statistics information model, a fault information model, a node energy consumption information model, a single service (for example, a 5G local area network (local area network, LAN), or a 5G mobile station (mobile station, MBS) traffic information model), or another model. This is not limited in this embodiment of this application.

In this embodiment of this application, the digital twin network ontology may be divided into a plurality of layers based on different service requirements. For example, when traffic of IP nodes needs to be analyzed, a network topology model may be used to provide information about IP nodes in a network and a connection relationship between nodes, and digital model information of an IP transmission node and traffic may be used to provide related information about traffic of each IP node distributed in the network. Alternatively, for example, when service traffic of a core network needs to be analyzed, the network topology model may be used to provide information about each service node of the core network and a connection relationship between nodes, and digital model information of the service nodes and the service traffic is used to provide related information about traffic of each service node of the core network.

In this embodiment of this application, a scenario supported by the digital twin network ontology includes operation verification, simulation, function observation (for example, observation of an artificial intelligence (artificial intelligence, AI) inference function), and the like. This is not limited in this embodiment of this application.

In this embodiment of this application, the digital twin network ontology may be referred to as a digital twin network object, or a virtual network object, or a digital twin network system, or a virtual network system, or a virtual network object, or a virtual object, or another name. This is not limited in this embodiment of this application.

In this embodiment of this application, the physical network may include a wireless network and a core network, where a network element may include a physical network function (physical network function, PNF) network element and a virtualized network function (virtualized network function, VNF) network element.

S620: The first device creates a digital twin network ontology in the digital twin network based on the first create request.

In this embodiment of this application, the digital twin network ontology includes one of the following at least one twin: a network topology twin, a network coverage twin, an energy consumption twin, a traffic twin, a network performance key performance indicator (key performance indicator, KPI) twin, a fault and alarm twin, or another twin. This is not limited in this embodiment of this application. It should be understood that a twin may be a part that is in the digital twin network ontology and that is used to perform a specific function.

In the method for managing a digital twin network provided in this embodiment of this application, the first device creates, based on the first create request of a second device, the digital twin network ontology in the digital twin network corresponding to the physical network. As the first device manages both the physical network and the digital twin network corresponding to the physical network, the digital twin network can implement synchronous data interaction with the physical network without using standardly defined data and a corresponding interface, avoiding an impact of the digital twin network on a function of the physical network.

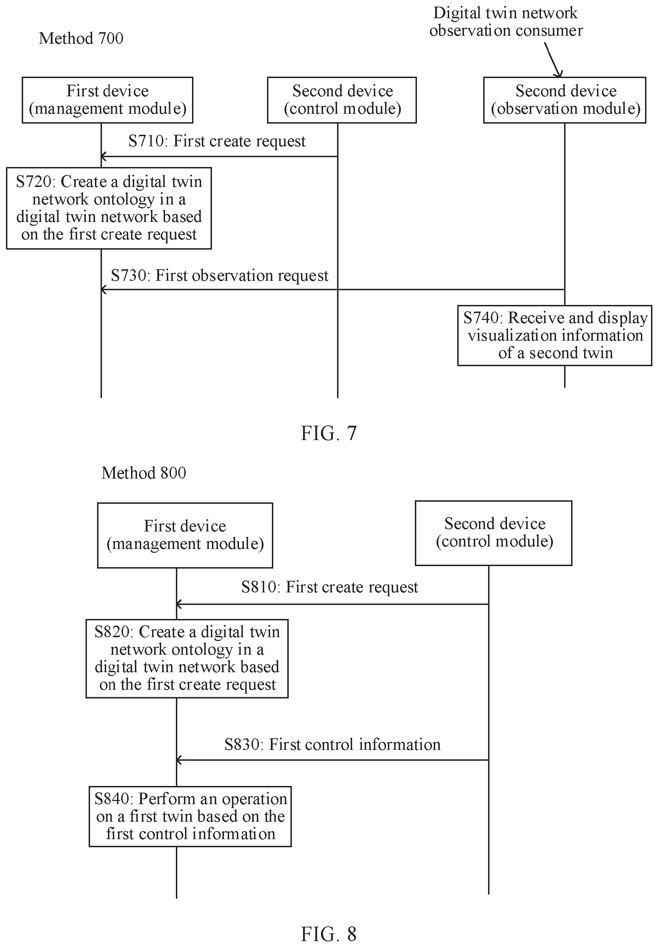

Based on the foregoing method for managing a digital twin network shown in FIG. 6, the following describes, in detail with reference to FIG. 7 to FIG. 10, the method for managing a digital twin network related to the foregoing application scenario 1 corresponding to FIG. 3.

In a possible implementation, FIG. 7 is a diagram of an example of a method for managing a digital twin network according to an embodiment of this application. The method is described by using interaction between a first device and a second device as an example. Certainly, an entity for executing actions of the first device in the method may further be an apparatus/a module in the first device, for example, a chip, a processor, or a processing unit in the first device; and an entity for executing actions of the second device in the method may further be an apparatus/a module in the second device, for example, a chip, a processor, or a processing unit in the second device. This is not specifically limited in this embodiment of this application. In embodiments of this application, processing performed by a single entity (for example, the first device or the second device) may alternatively be performed by a plurality of execution bodies, and these execution bodies may be logically and/or physically separated. For example, as shown in FIG. 7, the management method 700 according to an embodiment of this application includes the following steps.

S710: The second device sends a first create request to the first device. Correspondingly, the first device receives the first create request from the second device.

In this embodiment of this application, for related descriptions of step S710, refer to step S610. Details are not described herein again. With reference to the application scenario 1 of embodiments of this application, the first create request may be sent by a control module included in the second device.

S720: The first device creates a digital twin network ontology in the digital twin network based on the first create request.

In this embodiment of this application, for related descriptions of step S720, refer to step S620. Details are not described herein again. With reference to the application scenario 1 of embodiments of this application, a management module included in the first device creates the digital twin network ontology in the digital twin network based on the first create request.

S730: The second device sends a first observation request to the first device. Correspondingly, the first device receives the first observation request from the second device.

In this embodiment of this application, the first observation request is used to request visualization information of a second twin. With reference to the application scenario 1 of embodiments of this application, the first observation request may be sent by an observation module included in the second device.

In this embodiment of this application, the digital twin network ontology includes the second twin. In other words, the second twin may be a part of the digital twin network ontology. Optionally, the second twin may be one of the twins described in step S620. This is not limited in this embodiment of this application.

For example, the visualization information may be visualization information of a running state of the digital twin network, for example, a visualized network topology structure, a visualized network function model, or a visualized dynamic interaction procedure. This is not limited in this embodiment of this application.

S740: The first device sends visualization information of a second twin to the second device. Correspondingly, the second device receives and displays the visualization information of the second twin from the first device.

In this embodiment of this application, a user in the application scenario 1, for example, a digital twin network observation consumer, may observe the second twin based on the visualization information that is of the second twin and that is displayed by the second device.

In the method for managing a digital twin network provided in this embodiment of this application, the second device sends, to the first device, the first observation request that is used to request the visualization information of the second twin, and the second device receives the visualization information of the second twin from the first device and performs visualization. In this way, a user can visually observe a running state, and the like, of the second twin.

In a possible implementation, FIG. 8 is a diagram of an example of a method for managing a digital twin network according to an embodiment of this application. The method is described by using interaction between a first device and a second device as an example. Certainly, an entity for executing actions of the first device in the method may further be an apparatus/a module in the first device, for example, a chip, a processor, or a processing unit in the first device; and an entity for executing actions of the second device in the method may further be an apparatus/a module in the second device, for example, a chip, a processor, or a processing unit in the second device. This is not specifically limited in this embodiment of this application. In embodiments of this application, processing performed by a single entity (for example, the first device or the second device) may alternatively be performed by a plurality of execution bodies, and these execution bodies may be logically and/or physically separated. For example, as shown in FIG. 8, the management method 800 according to an embodiment of this application includes the following steps.

S810: The second device sends a first create request to the first device. Correspondingly, the first device receives the first create request from the second device.

In this embodiment of this application, for related descriptions of step S810, refer to step S610. Details are not described herein again. With reference to the application scenario 1 of embodiments of this application, the first create request may be sent by a control module included in the second device.

S820: The first device creates a digital twin network ontology in the digital twin network based on the first create request.

In this embodiment of this application, for related descriptions of step S820, refer to step S620. Details are not described herein again. With reference to the application scenario 1 of embodiments of this application, a management module included in the first device creates the digital twin network ontology in the digital twin network based on the first create request.

S830: The second device sends first control information to the first device. Correspondingly, the first device receives the first control information from the second device.

In this embodiment of this application, the first control information indicates an operation performed by the first device on a first twin, or the first control information is control delivery of an intent of the second device. This is not limited in this embodiment of this application. In this embodiment of this application, with reference to the application scenario 1, the first control information may be sent by the control module included in the second device. Optionally, the first control information may be determined by the control module based on the visualization information that is of the first twin and that is visually displayed by an observation module, or the first control information may be determined by the control module based on other information. This is not limited in this embodiment of this application.

In this embodiment of this application, the digital twin network ontology includes the first twin. In other words, the first twin may be a part of the digital twin network ontology. Optionally, the first twin may be one of the twins described in step S620. This is not limited in this embodiment of this application.

S840: The first device performs an operation on the first twin based on the first control information.

In this embodiment of this application, for example, the first twin includes twins related to network energy consumption, such as a network function resource model twin, a service node and service traffic model information twin, a signaling node and node traffic model twin, a performance and traffic statistics information model twin, and a node energy consumption information model twin. A first network device may analyze information about these twins, to analyze, monitor, and manage network energy consumption. Further, the first device may perform an energy saving-related operation or the like on a network.

In the application scenario 1 corresponding to this embodiment of this application, the first device performs the operation on the first twin based on the first control information. For example, in closed-loop management of the first device, the operation on the first twin is performed based on the first control information.

Optionally, the first control information may alternatively indicate an operation performed by the first device on a physical network. This is not limited in this embodiment of this application.

In the method for managing a digital twin network provided in this embodiment of this application, the second device may send the first control information to the first device through the control module, so that the first device performs the operation on the first twin based on the first control information.

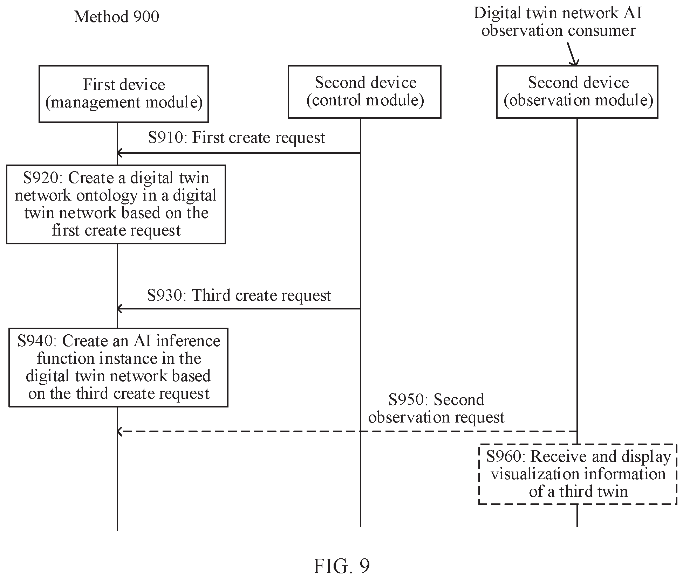

In a possible implementation, FIG. 9 is a diagram of an example of a method for managing a digital twin network according to an embodiment of this application. The method is described by using interaction between a first device and a second device as an example. Certainly, an entity for executing actions of the first device in the method may further be an apparatus/a module in the first device, for example, a chip, a processor, or a processing unit in the first device; and an entity for executing actions of the second device in the method may further be an apparatus/a module in the second device, for example, a chip, a processor, or a processing unit in the second device. This is not specifically limited in this embodiment of this application. In embodiments of this application, processing performed by a single entity (for example, the first device or the second device) may alternatively be performed by a plurality of execution bodies, and these execution bodies may be logically and/or physically separated. For example, as shown in FIG. 9, the management method 900 according to an embodiment of this application includes the following steps.

S910: The second device sends a first create request to the first device. Correspondingly, the first device receives the first create request from the second device.

In this embodiment of this application, for related descriptions of step S910, refer to step S610. Details are not described herein again. With reference to the application scenario 1 of embodiments of this application, the first create request may be sent by a control module included in the second device.

S920: The first device creates a digital twin network ontology in the digital twin network based on the first create request.

In this embodiment of this application, for related descriptions of step S920, refer to step S620. Details are not described herein again. With reference to the application scenario 1 of embodiments of this application, a management module included in the first device creates the digital twin network ontology in the digital twin network based on the first create request.

S930: The second device sends a third create request to the first device. Correspondingly, the first device receives the third create request from the second device.

In this embodiment of this application, the third create request is used to request to create an AI inference function instance in the digital twin network ontology. Alternatively, in other words, an AI inference function is deployed in the digital twin network ontology, or a management function of the first device for a physical network and the digital twin network includes an analytics function, and the analytics function includes an AI inference function. With reference to the application scenario 1 of embodiments of this application, the third create request may be sent by the control module included in the second device.

In this embodiment of this application, the digital twin network ontology includes a third twin, and the third twin is associated with the AI inference function.

S940: The first device creates the AI inference function instance in the digital twin network ontology based on the third create request.

For example, an AI inference model deployed on the AI inference function instance is used to output an AI inference result.

Optionally, the first device may determine, based on whether the AI inference result output by the AI inference model deployed on the AI inference function instance in the digital twin network ontology satisfies a service requirement, whether to create the AI inference function instance in the physical network. For example, if the AI inference result output by the AI inference model satisfies the service requirement, the first device creates the AI inference function instance in the physical network. In this way, the first device can first verify the AI inference function instance in the digital twin network ontology, and then create the AI inference function instance in the physical network by using a verification result as a guide, thereby avoiding a resource loss caused by directly creating, in the physical network, an AI inference function instance that does not satisfy the service requirement.

In the method for managing a digital twin network provided in this embodiment of this application, the first device creates the AI inference function instance in the digital twin network ontology, so that the digital twin network can verify the AI inference function based on the AI inference result output by the AI inference model. Further, when the AI inference result satisfies the service requirement, the first device may deploy the AI inference function instance in the physical network based on the AI inference result output by the AI inference model deployed on the AI inference function instance in the digital twin network ontology, thereby avoiding the resource loss caused by creating, in the physical network, the AI inference function instance that does not satisfy the service requirement.

Optionally, as shown in FIG. 9, the method for managing a digital twin network provided in this embodiment of this application may further include the following steps.

S950: The second device sends a second observation request to the first device. Correspondingly, the first device receives the second observation request from the second device.

In this embodiment of this application, the second observation request is used to request visualization information of the third twin, that is, the second observation request is used to request to observe the AI inference result. In this embodiment of this application, for step S950, refer to related descriptions of step S730, where only the first observation request needs to be replaced with the second observation request, and the second twin needs to be replaced with the third twin. Details are not described again in this embodiment of this application. In this embodiment of this application, with reference to the application scenario 1, the second observation request may be sent by an observation module included in the second device.

S960: The first device sends visualization information of the third twin to the second device. Correspondingly, the second device receives and displays the visualization information of the third twin from the first device.

In this embodiment of this application, for step S960, refer to related descriptions of step S740, where only the first observation request needs to be replaced with the second observation request, and the second twin needs to be replaced with the third twin. Details are not described again in this embodiment of this application.

In this embodiment of this application, a user in the application scenario 1, for example, a digital twin network observation consumer, may observe the third twin based on the visualization information that is of the third twin and that is displayed by the second device, that is, observe a result of the AI inference function.

In the method for managing a digital twin network provided in this embodiment of this application, the second device sends, to the first device, the second observation request that is used to request the visualization information of the third twin, and the second device receives the visualization information of the third twin from the first device and performs visualization. In this way, a user can visually observe the AI inference result, and the like.

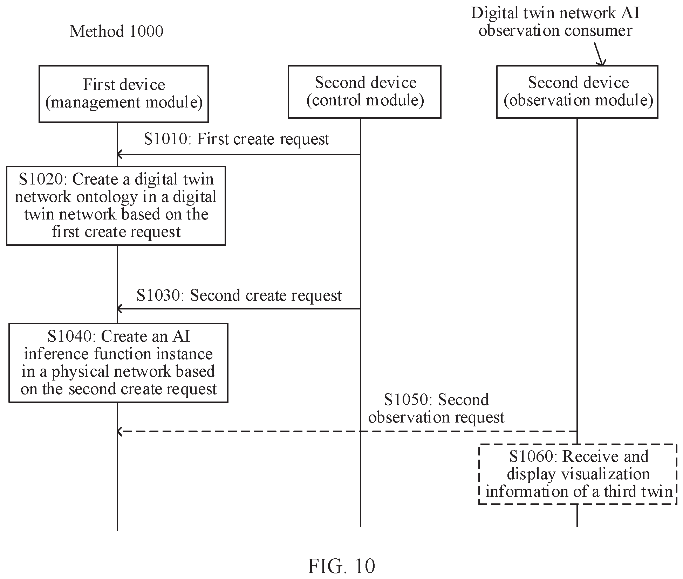

In another possible implementation, FIG. 10 is a diagram of an example of a method for managing a digital twin network according to an embodiment of this application. The method is described by using interaction between a first device and a second device as an example. Certainly, an entity for executing actions of the first device in the method may further be an apparatus/a module in the first device, for example, a chip, a processor, or a processing unit in the first device; and an entity for executing actions of the second device in the method may further be an apparatus/a module in the second device, for example, a chip, a processor, or a processing unit in the second device. This is not specifically limited in this embodiment of this application. In embodiments of this application, processing performed by a single entity (for example, the first device or the second device) may alternatively be performed by a plurality of execution bodies, and these execution bodies may be logically and/or physically separated. For example, as shown in FIG. 10, the management method 1000 according to an embodiment of this application includes the following steps.

S1010: The second device sends a first create request to the first device. Correspondingly, the first device receives the first create request from the second device.

In this embodiment of this application, for related descriptions of step S1010, refer to step S610. Details are not described herein again. With reference to the application scenario 1 of embodiments of this application, the first create request may be sent by a control module included in the second device.

S1020: The first device creates a digital twin network ontology in the digital twin network based on the first create request.

In this embodiment of this application, for related descriptions of step S1020, refer to step S620. Details are not described herein again. With reference to the application scenario 1 of embodiments of this application, a management module included in the first device creates the digital twin network ontology in the digital twin network based on the first create request.

S1030: The second device sends a second create request to the first device. Correspondingly, the first device receives the second create request from the second device.

In this embodiment of this application, the second create request is used to request to create an AI inference function instance in a physical network.

S1040: The first device creates the AI inference function instance in a physical network based on the second create request.

For example, an AI inference model deployed on the AI inference function instance is used to output an AI inference result.

In this embodiment of this application, the digital twin network ontology is further configured to obtain the AI inference result from the physical network, to help the digital twin network monitor the physical network.

In this embodiment of this application, the digital twin network ontology includes a third twin, and the third twin is associated with an AI inference function.

In the method for managing a digital twin network provided in this embodiment of this application, the first device creates the AI inference function instance in the physical network, so that the physical network can send the AI inference result output by the AI inference model to the digital twin network, thereby monitoring the AI inference function of the physical network.

Optionally, as shown in FIG. 10, the method for managing a digital twin network provided in this embodiment of this application may further include the following steps.

S1050: The second device sends a second observation request to the first device. Correspondingly, the first device receives the second observation request from the second device.

In this embodiment of this application, for step S1050, refer to related descriptions of step S950. Details are not described herein again.

S1060: The first device sends visualization information of a third twin to the second device. Correspondingly, the second device receives and displays the visualization information of the third twin from the first device.

In this embodiment of this application, for step S1060, refer to related descriptions of step S960. Details are not described herein again.

In this embodiment of this application, a user in the application scenario 1, for example, a digital twin network AI observation consumer, may observe the third twin based on the visualization information that is of the third twin and that is displayed by the second device, that is, observe a result of the AI inference function.

In the method for managing a digital twin network provided in this embodiment of this application, the second device sends, to the first device, the second observation request that is used to request the visualization information of the third twin, and the second device receives the visualization information of the third twin from the first device and performs visualization. In this way, a user can visually observe the AI inference result, and the like.

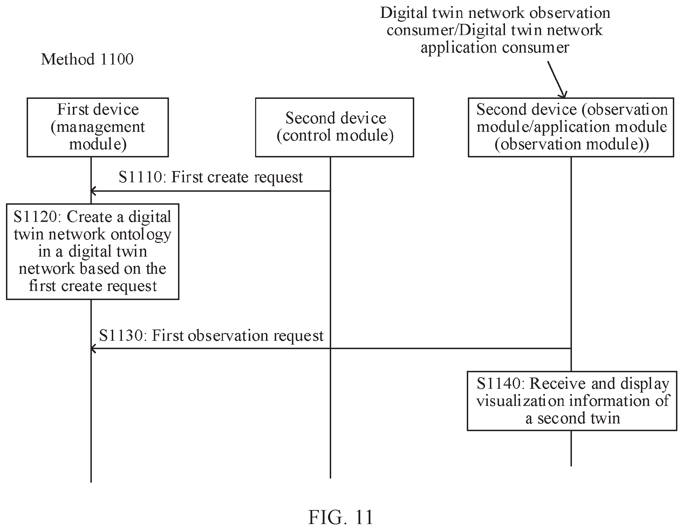

Based on the foregoing method for managing a digital twin network shown in FIG. 6, the following describes, in detail with reference to FIG. 11 to FIG. 14, the method for managing a digital twin network related to the foregoing application scenario 2 corresponding to FIG. 4.

In a possible implementation, FIG. 11 is a diagram of an example of a method for managing a digital twin network according to an embodiment of this application. The method is described by using interaction between a first device and a second device as an example. Certainly, an entity for executing actions of the first device in the method may further be an apparatus/a module in the first device, for example, a chip, a processor, or a processing unit in the first device; and an entity for executing actions of the second device in the method may further be an apparatus/a module in the second device, for example, a chip, a processor, or a processing unit in the second device. This is not specifically limited in this embodiment of this application. In embodiments of this application, processing performed by a single entity (for example, the first device or the second device) may alternatively be performed by a plurality of execution bodies, and these execution bodies may be logically and/or physically separated. For example, as shown in FIG. 11, the management method 1100 according to an embodiment of this application includes the following steps.

S1110: The second device sends a first create request to the first device. Correspondingly, the first device receives the first create request from the second device.

In this embodiment of this application, for related descriptions of step S1110, refer to step S610. Details are not described herein again. With reference to the application scenario 2 of embodiments of this application, the first create request may be sent by a control module included in the second device.

S1120: The first device creates a digital twin network ontology in the digital twin network based on the first create request.

In this embodiment of this application, for related descriptions of step S1120, refer to step S620. Details are not described herein again. With reference to the application scenario 2 of embodiments of this application, a management module included in the first device creates the digital twin network ontology in the digital twin network based on the first create request.

S1130: The second device sends a first observation request to the first device. Correspondingly, the first device receives the first observation request from the second device.

In this embodiment of this application, the first observation request is used to request visualization information of a second twin. For related descriptions of the visualization information of the second twin, refer to the descriptions in step S730. Details are not described herein again. It should be noted that, with reference to the application scenario 2, the first observation request may be sent by an observation module included in the second device, or the first observation request may be sent by an application module included in the second device, where the application module includes the observation module.

In this embodiment of this application, for a description of the second twin, refer to the description in step S730. Details are not described herein again.

S1140: The first device sends the visualization information of the second twin to the second device. Correspondingly, the second device receives and displays the visualization information of the second twin from the first device.

In this embodiment of this application, a user in the application scenario 2, for example, a digital twin network application consumer (corresponding to the application module, where the application module includes the observation module) may observe the second twin based on the visualization information that is of the second twin and that is displayed by the second device; for another example, a digital twin network observation consumer (corresponding to the observation module) may observe the second twin based on the visualization information that is of the second twin and that is displayed by the second device.

In the method for managing a digital twin network provided in this embodiment of this application, the second device sends, to the first device, the first observation request that is used to request the visualization information of the second twin, and the second device receives the visualization information of the second twin from the first device and performs visualization display. In this way, a user (digital twin network observation/application consumer) can visually observe a running state, and the like, of the second twin.

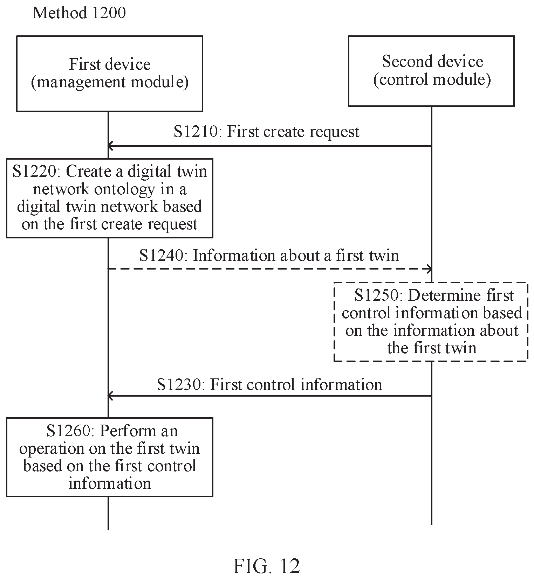

In a possible implementation, FIG. 12 is a diagram of an example of a method for managing a digital twin network according to an embodiment of this application. The method is described by using interaction between a first device and a second device as an example. Certainly, an entity for executing actions of the first device in the method may further be an apparatus/a module in the first device, for example, a chip, a processor, or a processing unit in the first device; and an entity for executing actions of the second device in the method may further be an apparatus/a module in the second device, for example, a chip, a processor, or a processing unit in the second device. This is not specifically limited in this embodiment of this application. In embodiments of this application, processing performed by a single entity (for example, the first device or the second device) may alternatively be performed by a plurality of execution bodies, and these execution bodies may be logically and/or physically separated. For example, as shown in FIG. 12, the management method 1200 according to an embodiment of this application includes the following steps.

S1210: The second device sends a first create request to the first device. Correspondingly, the first device receives the first create request from the second device.

In this embodiment of this application, for related descriptions of step S1210, refer to step S610. Details are not described herein again. With reference to the application scenario 2 of embodiments of this application, the first create request may be sent by a control module included in the second device.

S1220: The first device creates a digital twin network ontology in the digital twin network based on the first create request.

In this embodiment of this application, for related descriptions of step S1220, refer to step S620. Details are not described herein again. With reference to the application scenario 2 of embodiments of this application, a management module included in the first device creates the digital twin network ontology in the digital twin network based on the first create request.

S1230: The second device sends first control information to the first device. Correspondingly, the first device receives the first control information from the second device.

In this embodiment of this application, the first control information indicates an operation performed by the first device on a first twin, or the first control information is control delivery of an intent of the second device. This is not limited in this embodiment of this application.

In a possible implementation of this embodiment of this application, with reference to the application scenario 2 of embodiments of this application, the first control information may be sent by the control module included in the second device. Optionally, the first control information may be determined by the control module, included in the second device, based on visualization information that is of the first twin and that is visually displayed by an observation module (or an observation module included in an application module), or the first control information may be determined by the control module included in the second device based on other information. This is not limited in this embodiment of this application.

In another possible implementation of this embodiment of this application, before step S1230, the method further includes step S1240 and step S1250.

S1240: The first device sends information about the first twin to the second device. Correspondingly, the second device receives the information about the first twin from the first device.

In this embodiment of this application, the information about the first twin may include one or more of the following: a network topology, network coverage, energy consumption, traffic, a network performance KPI, and fault alarm information, or the information about the first twin may include other information. This is not limited in this embodiment of this application.

S1250: The second device determines first control information based on the information about the first twin.

In this embodiment of this application, the first control information may be determined by a first application, corresponding to the application module included in the second device, through analytics based on the information about the first twin, where the first twin is configured to perform a function of the first application.

In this embodiment of this application, the digital twin network ontology includes the first twin. In other words, the first twin may be a part of the digital twin network ontology. Optionally, the first twin may be one of the twins described in step S620. This is not limited in this embodiment of this application.

S1260: The first device performs an operation on the first twin based on the first control information.

For example, in closed-loop management of the first device, the operation on the first twin is performed based on the first control information.

Optionally, the second device may also send second control information to the first device, where the second control information indicates an operation performed by the first device on a physical network.

In the method for managing a digital twin network provided in this embodiment of this application, the second device may send the first control information to the first device through the control module. The first control information may be sent by the control module after the application module analyzes the information about the first twin, so that the first device performs the operation on the first twin based on the first control information.

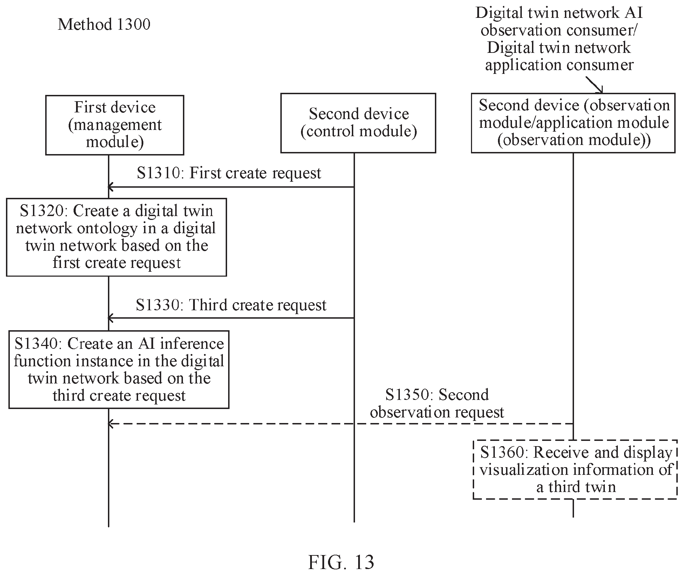

In a possible implementation, FIG. 13 is a diagram of an example of a method for managing a digital twin network according to an embodiment of this application. The method is described by using interaction between a first device and a second device as an example. Certainly, an entity for executing actions of the first device in the method may further be an apparatus/a module in the first device, for example, a chip, a processor, or a processing unit in the first device; and an entity for executing actions of the second device in the method may further be an apparatus/a module in the second device, for example, a chip, a processor, or a processing unit in the second device. This is not specifically limited in this embodiment of this application. In embodiments of this application, processing performed by a single entity (for example, the first device or the second device) may alternatively be performed by a plurality of execution bodies, and these execution bodies may be logically and/or physically separated. For example, as shown in FIG. 13, the management method 1300 according to an embodiment of this application includes the following steps.

S1310: The second device sends a first create request to the first device. Correspondingly, the first device receives the first create request from the second device.

In this embodiment of this application, for related descriptions of step S1310, refer to step S610. Details are not described herein again. With reference to the application scenario 2 of embodiments of this application, the first create request may be sent by a control module included in the second device.

S1320: The first device creates a digital twin network ontology in the digital twin network based on the first create request.

In this embodiment of this application, for related descriptions of step S1320, refer to step S620. Details are not described herein again. With reference to the application scenario 2 of embodiments of this application, a management module included in the first device creates the digital twin network ontology in the digital twin network based on the first create request.

S1330: The second device sends a third create request to the first device. Correspondingly, the first device receives the third create request from the second device.

In this embodiment of this application, the third create request is used to request to create an AI inference function instance in the digital twin network ontology. Alternatively, in other words, an AI inference function is deployed in the digital twin network ontology, or a management function of the first device for a physical network and the digital twin network includes an analytics function, and the analytics function includes an AI inference function.

In this embodiment of this application, the digital twin network ontology includes a third twin, and the third twin is associated with the AI inference function.

S1340: The first device creates the AI inference function instance in the digital twin network ontology based on the third create request.

For example, an AI inference model deployed on the AI inference function instance is used to output an AI inference result.

Optionally, the first device may determine, based on whether the AI inference result output by the AI inference model deployed on the AI inference function instance in the digital twin network ontology satisfies a service requirement, whether to create the AI inference function instance in the physical network. For example, if the AI inference result output by the AI inference model satisfies the service requirement, the first device creates the AI inference function instance in the physical network. In this way, the first device can first verify the AI inference function instance in the digital twin network ontology, and then create the AI inference function instance in the physical network by using a verification result as a guide, thereby avoiding a resource loss caused by directly creating, in the physical network, an AI inference function instance that does not satisfy the service requirement.

In the management method provided in this embodiment of this application, the first device creates the AI inference function instance in the digital twin network ontology, so that the digital twin network can verify the AI inference function based on the AI inference result output by the AI inference model. Further, when the AI inference result satisfies the service requirement, the first device may deploy the AI inference function instance in the physical network based on the AI inference result output by the AI inference model deployed on the AI inference function instance in the digital twin network ontology, thereby avoiding the resource loss caused by creating, in the physical network, the AI inference function instance that does not satisfy the service requirement.

Optionally, as shown in FIG. 13, the method for managing a digital twin network provided in this embodiment of this application may further include the following steps.

S1350: The second device sends a second observation request to the first device. Correspondingly, the first device receives the second observation request from the second device.

In this embodiment of this application, the second observation request is used to request visualization information of the third twin, that is, the second observation request is used to request to observe the AI inference result. In this embodiment of this application, for step S1350, refer to related descriptions of step S730, where only the first observation request needs to be replaced with the second observation request, and the second twin needs to be replaced with the third twin. Details are not described again in this embodiment of this application. With reference to the application scenario 2 provided in embodiments of this application, the second observation request may be sent by an observation module included in the second device, or the second observation request may be sent by an application module included in the second device, where the application module includes an observation module.

S1360: The first device sends the visualization information of the third twin to the second device. Correspondingly, the second device receives and displays the visualization information of the third twin from the first device.

In this embodiment of this application, for step S1360, refer to related descriptions of step S740, where only the first observation request needs to be replaced with the second observation request, and the second twin needs to be replaced with the third twin. Details are not described again in this embodiment of this application.

In this embodiment of this application, a user in the application scenario 2, for example, a digital twin network application consumer, may observe the third twin based on the visualization information that is of the third twin and that is displayed by the application module included in the second device, that is, observe a result of the AI inference function. The observation module included in the application module may display the visualization information of the third twin in a visualization manner.

Optionally, the user in the application scenario 2 may alternatively be, for example, a digital twin network AI observation consumer, and may observe the third twin based on the visualization information that is of the third twin and that is displayed by the second device, that is, observe the result of the AI inference function.

In the method for managing a digital twin network provided in this embodiment of this application, the second device sends, to the first device, the second observation request that is used to request the visualization information of the third twin, and the second device receives the visualization information of the third twin from the first device and performs visualization. In this way, a user (for example, a digital twin application consumer) can visually observe the AI inference result, and the like.

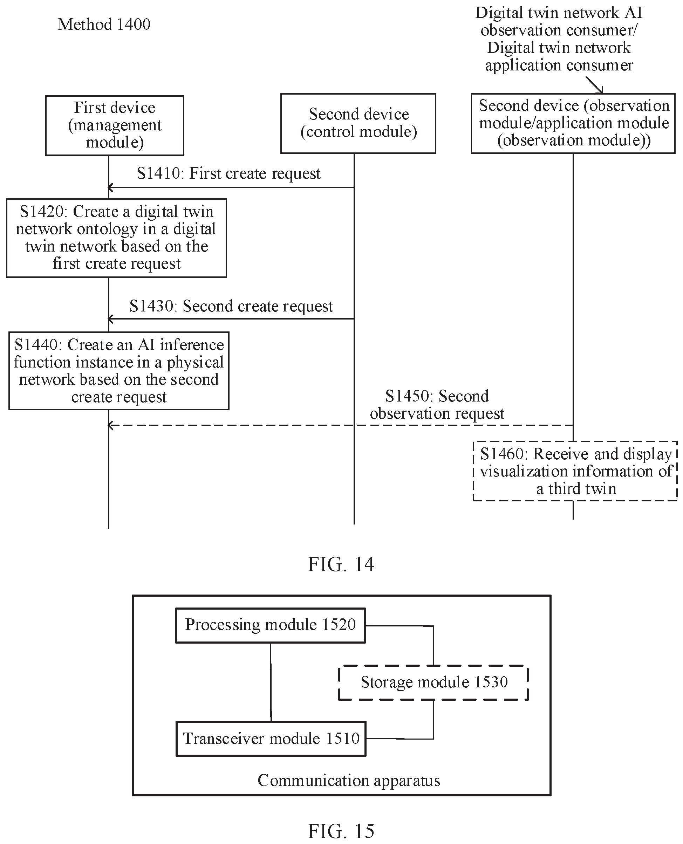

In another possible implementation, FIG. 14 is a diagram of an example of a method for managing a digital twin network according to an embodiment of this application. The method is described by using interaction between a first device and a second device as an example. Certainly, an entity for executing actions of the first device in the method may further be an apparatus/a module in the first device, for example, a chip, a processor, or a processing unit in the first device; and an entity for executing actions of the second device in the method may further be an apparatus/a module in the second device, for example, a chip, a processor, or a processing unit in the second device. This is not specifically limited in this embodiment of this application. In embodiments of this application, processing performed by a single entity (for example, the first device or the second device) may alternatively be performed by a plurality of execution bodies, and these execution bodies may be logically and/or physically separated. For example, as shown in FIG. 14, the management method 1400 according to an embodiment of this application includes the following steps.

S1410: The second device sends a first create request to the first device. Correspondingly, the first device receives the first create request from the second device.

In this embodiment of this application, for related descriptions of step S1010, refer to step S610. Details are not described herein again. With reference to the application scenario 2 of embodiments of this application, the first create request may be sent by a control module included in the second device.

S1420: The first device creates a digital twin network ontology in the digital twin network based on the first create request.

In this embodiment of this application, for related descriptions of step S1420, refer to step S620. Details are not described herein again. With reference to the application scenario 1 of embodiments of this application, a management module included in the first device creates the digital twin network ontology in the digital twin network based on the first create request.

S1430: The second device sends a second create request to the first device. Correspondingly, the first device receives the second create request from the second device.

In this embodiment of this application, the second create request is used to request to create an AI inference function instance in a physical network.

S1440: The first device creates the AI inference function instance in the physical network based on the second create request.

For example, an AI inference model deployed on the AI inference function instance is used to output an AI inference result.

In this embodiment of this application, the digital twin network ontology is further configured to obtain the AI inference result from the physical network, to help the digital twin network monitor the physical network.

In this embodiment of this application, the digital twin network ontology includes a third twin, and the third twin is associated with the AI inference function.

In the management method provided in this embodiment of this application, the first device creates the AI inference function instance in the physical network, so that the physical network can send the AI inference result output by the AI inference model to the digital twin network, thereby monitoring the AI inference function of the physical network.

Optionally, as shown in FIG. 14, the method for managing a digital twin network provided in this embodiment of this application may further include the following steps.

S1450: The second device sends a second observation request to the first device. Correspondingly, the first device receives the second observation request from the second device.

In this embodiment of this application, for step S1450, refer to related descriptions of step S1350. Details are not described herein again.

S1460: The first device sends visualization information of the third twin to the second device. Correspondingly, the second device receives and displays the visualization information of the third twin from the first device.

In this embodiment of this application, for step S1460, refer to related descriptions of step S1360. Details are not described herein again.

In the method for managing a digital twin network provided in this embodiment of this application, the second device sends, to the first device, the second observation request that is used to request the visualization information of the third twin, and the second device receives the visualization information of the third twin from the first device and performs visualization. In this way, a user can visually observe the AI inference result, and the like.

The foregoing mainly describes the solutions provided in embodiments of this application from a perspective of interaction between the first device and the second device. Correspondingly, an embodiment of this application further provides a communication apparatus, and the communication apparatus is configured to implement the foregoing various methods. The communication apparatus may be the first device in the foregoing method embodiments, an apparatus including the foregoing first device, or a component that can be used in the first device. Alternatively, the communication apparatus may be the second device in the foregoing method embodiments, an apparatus including the foregoing second device, or a component that can be used in the second device. It may be understood that, to implement the foregoing functions, the communication apparatus includes a corresponding hardware structure and/or software module for executing the various functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The foregoing integrated module may be implemented in a form of hardware, or may be implemented in a form of a software functional module. It should be understood that division into modules in embodiments of this application is an example, and is merely logical function division. During actual implementation, there may be another division manner.

For example, FIG. 15 is a diagram of a communication apparatus according to an embodiment of this application. In an example in which the communication apparatus is the first device (which may be a chip of the first device, a module of the first device, or an internal apparatus of the first device) in the foregoing method embodiments, the first device includes a transceiver module 1510 and a processing module 1520. The transceiver module 1510 may also be referred to as a transceiver unit, and is configured to implement a transceiver function. For example, the transceiver module may be a transceiver circuit, a transceiver machine, a transceiver, or a communication interface.

In this embodiment of this application, the transceiver module 1510 is configured to receive a first create request, where the first create request is used to request to create a digital twin network ontology in a digital twin network corresponding to a physical network, and the processing module 1520 is configured to manage the physical network and the digital twin network. The first device creates the digital twin network ontology in the digital twin network based on the first create request.

In this embodiment of this application, a management function of the processing module 1520 for the physical network and the digital twin network includes at least one of the following: closed-loop management, acquisition of performance and fault alarm information of the digital twin network, an analytics function, and a control function for the digital twin network ontology.

In a possible implementation, the digital twin network ontology includes a first twin. The transceiver module 1510 is further configured to receive first control information, and the processing module 1520 is further configured to perform an operation on the first twin based on the first control information.

In this embodiment of this application, the first twin is configured to perform a function of a first application, and the first control information is determined by the first application by performing analytics based on information about the first twin.

In this embodiment of this application, the information about the first twin includes one or more of the following: a network topology, network coverage, energy consumption, traffic, a network performance key performance indicator KPI, and a fault and an alarm.

In a possible implementation, the digital twin network ontology includes a second twin. The transceiver module 1510 is further configured to receive a first observation request, where the first observation request is used to request visualization information of the second twin, and the visualization information of the second twin is for visually displaying the second twin. The transceiver module 1510 is further configured to send the visualization information of the second twin.

In this embodiment of this application, an artificial intelligence AI inference function is deployed in the digital twin network ontology; or a management function of the processing module 1520 for the physical network and the digital twin network includes an analytics function, and the analytics function includes the AI inference function.

In this embodiment of this application, the transceiver module 1510 is further configured to receive a second create request, where the second create request is used to request to create an AI inference function instance in the physical network, and an AI inference model deployed on the AI inference function instance is used to output an AI inference result. The processing module 1520 is further configured to create the AI inference function instance in the physical network based on the second create request.

In this embodiment of this application, the digital twin network ontology is configured to obtain the AI inference result from the physical network.

In a possible implementation, the digital twin network ontology includes a third twin, and the third twin is associated with the AI inference function.

In this embodiment of this application, the digital twin network ontology includes one of the following at least one twin: a network topology twin, a network coverage twin, an energy consumption twin, a traffic twin, a network performance key performance indicator KPI twin, and a fault and alarm twin.

All related content of the steps in the foregoing method embodiments may be cited in function descriptions of the corresponding functional modules. Details are not described herein again. Optionally, the communication apparatus may further include a storage module 1530. The storage module 1530 may be configured to store instructions and/or data, and the processing module 1520 may read the instructions and/or the data in the storage module 1530.

In this embodiment of this application, the first device is presented in a form of dividing functional modules in an integrated manner. The modules herein may be an ASIC, a circuit, a processor that executes one or more software or firmware programs, a memory, an integrated logic circuit, and/or another component capable of providing the foregoing functions. In a simple embodiment, a person skilled in the art may figure out that the first device may be in a form of the communication apparatus shown in FIG. 5.

For example, the processor 501 in the communication apparatus shown in FIG. 5 may invoke the computer-executable instructions stored in the memory 503, so that the communication apparatus performs the method for managing a digital twin network in the foregoing method embodiments.

Specifically, a function/an implementation process of the transceiver module 1510 and the processing module 1520 in FIG. 15 may be implemented by the processor 501 in the communication apparatus shown in FIG. 5 by invoking the computer-executable instructions stored in the memory 503. Alternatively, a function/an implementation process of the processing module 1520 in FIG. 15 may be implemented by the processor 501 in the communication apparatus shown in FIG. 5 by invoking the computer-executable instructions stored in the memory 503, and a function/an implementation process of the transceiver module 1510 in FIG. 15 may be implemented through the communication interface 504 in the communication apparatus shown in FIG. 5.

As the first device (which may be a chip of the first device, a module of the first device, or an internal apparatus of the first device) provided in embodiments of this application can perform the foregoing method for managing a digital twin network, for a technical effect that can be obtained by the first device, refer to the foregoing method embodiments. Details are not described herein again.

Alternatively, in an example in which the communication apparatus is the second device (which may be a chip of the second device, a module of the second device, or an internal apparatus of the second device) in the foregoing method embodiments, the second device includes a transceiver module 1510 and a processing module 1520. The transceiver module 1510 may also be referred to as a transceiver unit, and is configured to implement a transceiver function. For example, the transceiver module may be a transceiver circuit, a transceiver machine, a transceiver, or a communication interface.

In this embodiment of this application, the transceiver module 1510 is configured to send a first create request, where the first create request is used to request to create a digital twin network ontology in a digital twin network corresponding to a physical network; and the transceiver module 1510 is further configured to send first control information, where the first control information indicates an operation performed by a first device on a first twin, and the digital twin network ontology includes the first twin.

In this embodiment of this application, the first twin is configured to perform a function of a first application, and the first control information is determined by the first application by performing analytics based on information about the first twin.

In this embodiment of this application, the information about the first twin includes one or more of the following: a network topology, network coverage, energy consumption, traffic, a network performance key performance indicator KPI, and a fault and an alarm.

In this embodiment of this application, the transceiver module 1510 is further configured to send a first observation request, where the first observation request is used to request visualization information of a second twin, and the digital twin network ontology includes the second twin. The transceiver module 1510 is further configured to receive and display the visualization information of the second twin.

In this embodiment of this application, the transceiver module 1510 is further configured to send a second create request, where the second create request is used to request to create an artificial intelligence AI inference function instance in the physical network, and an AI inference model deployed on the AI inference function instance is used to output an AI inference result.

In this embodiment of this application, the digital twin network ontology includes a third twin, and the third twin is associated with an AI inference function.

All related content of the steps in the foregoing method embodiments may be cited in function descriptions of the corresponding functional modules. Details are not described herein again. Optionally, the communication apparatus may further include a storage module 1530. The storage module 1530 may be configured to store instructions and/or data, and the processing module 1520 may read the instructions and/or the data in the storage module 1530.

In this embodiment of this application, the second device is presented in a form of dividing functional modules in an integrated manner. The modules herein may be an ASIC, a circuit, a processor that executes one or more software or firmware programs, a memory, an integrated logic circuit, and/or another component capable of providing the foregoing functions. In a simple embodiment, a person skilled in the art may figure out that the terminal device may be in a form of the communication apparatus shown in FIG. 5.

For example, the processor 501 in the communication apparatus shown in FIG. 5 may invoke the computer-executable instructions stored in the memory 503, so that the communication apparatus performs the method for managing a digital twin network in the foregoing method embodiments.

Specifically, a function/an implementation process of the transceiver module 1510 and the processing module 1520 in FIG. 15 may be implemented by the processor 501 in the communication apparatus shown in FIG. 5 by invoking the computer-executable instructions stored in the memory 503. Alternatively, a function/an implementation process of the processing module 1520 in FIG. 15 may be implemented by the processor 501 in the communication apparatus shown in FIG. 5 by invoking the computer-executable instructions stored in the memory 503, and a function/an implementation process of the transceiver module 1510 in FIG. 15 may be implemented through the communication interface 504 in the communication apparatus shown in FIG. 5.

As the second device (which may be a chip of the second device, a module of the second device, or an internal apparatus of the second device) provided in embodiments of this application can perform the foregoing method for managing a digital twin network, for a technical effect that can be obtained by the second device, refer to the foregoing method embodiments. Details are not described herein again.

It should be understood that one or more of the foregoing modules or units may be implemented by software, hardware, or a combination thereof. When any one of the foregoing modules or units is implemented by software, the software exists in a form of computer program instructions, and is stored in a memory, and a processor may be configured to execute the program instructions and implement the foregoing method procedures. The processor may be built in an SoC or an ASIC, or may be an independent semiconductor chip. In addition to a core that is configured to execute software instructions to perform an operation or processing, the processor may further include a necessary hardware accelerator, for example, a field programmable gate array (field programmable gate array, FPGA), a programmable logic device (programmable logic device, PLD), or a logic circuit that implements a special logic operation.

When the foregoing modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include the memory. When the communication apparatus is the chip system, the communication apparatus may include a chip, or may include the chip and another discrete component. This is not specifically limited in embodiments of this application.

Optionally, an embodiment of this application further provides a computer-readable storage medium. The computer-readable storage medium stores a computer program or instructions. When the computer program or the instructions are run on a communication apparatus, the communication apparatus can perform the method in any one of the foregoing method embodiments or any one of the implementations of the foregoing method embodiments.

Optionally, an embodiment of this application further provides a communication system. The communication system includes the first device in the foregoing method embodiments and the second device in the foregoing method embodiments.

All or a part of the foregoing embodiments may be implemented by software, hardware, firmware, or any combination thereof. When a software program is used for implementation, all or a part of embodiments may be implemented in a form of a computer program product. The computer program product includes one or more computer instructions. When the computer program instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example description of this application defined by the accompanying claims, and are considered as any of or all modifications, variations, combinations, or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies of this application.

## Claims

1. A method for managing a digital twin network, applied to a first device, comprising:
receiving a first create request, wherein the first create request is used to request to create a digital twin network ontology in a digital twin network corresponding to a physical network, and the first device manages the physical network and the digital twin network; and
creating the digital twin network ontology in the digital twin network based on the first create request.

2. The method according to claim 1, wherein a management function of the first device for the physical network and the digital twin network comprises at least one of the following: closed-loop management, acquisition of performance and fault alarm information of the digital twin network, an analytics function, and a control function for the digital twin network ontology.

3. The method according to claim 1 or 2, wherein the digital twin network ontology comprises a first twin, and the method further comprises:
receiving first control information; and
performing an operation on the first twin based on the first control information.

4. The method according to claim 3, wherein the first twin is configured to perform a function of a first application, and the first control information is determined by the first application by performing analytics based on information about the first twin.

5. The method according to claim 4, wherein the information about the first twin comprises one or more of the following: a network topology, network coverage, energy consumption, traffic, a network performance key performance indicator KPI, and a fault and an alarm.

6. The method according to any one of claims 1 to 5, wherein the digital twin network ontology comprises a second twin, and the method further comprises:
receiving a first observation request, wherein the first observation request is used to request visualization information of the second twin, and the visualization information of the second twin is for visually displaying the second twin; and
sending the visualization information of the second twin.

7. The method according to any one of claims 1 to 6, wherein an artificial intelligence AI inference function is deployed in the digital twin network ontology; or a management function of the first device for the physical network and the digital twin network comprises an analytics function, and the analytics function comprises the AI inference function.

8. The method according to any one of claims 1 to 6, wherein the method further comprises:
receiving a second create request, wherein the second create request is used to request to create an AI inference function instance in the physical network, and an AI inference model deployed on the AI inference function instance is used to output an AI inference result; and
creating the AI inference function instance in the physical network based on the second create request.

9. The method according to claim 8, wherein the digital twin network ontology is configured to obtain the AI inference result from the physical network.

10. The method according to any one of claims 1 to 9, wherein the digital twin network ontology comprises a third twin, and the third twin is associated with the AI inference function.

11. The method according to any one of claims 1 to 10, wherein the digital twin network ontology comprises one of the following at least one twin:
a network topology twin, a network coverage twin, an energy consumption twin, a traffic twin, a network performance key performance indicator KPI twin, and a fault and alarm twin.

12. A method for managing a digital twin network, applied to a second device, comprising:
sending a first create request, wherein the first create request is used to request to create a digital twin network ontology in a digital twin network corresponding to a physical network; and
sending first control information, wherein the first control information indicates an operation performed by a first device on a first twin, and the digital twin network ontology comprises the first twin.

13. The method according to claim 12, wherein the first twin is configured to perform a function of a first application, and the first control information is determined by the first application by performing analytics based on information about the first twin.

14. The method according to claim 13, wherein the information about the first twin comprises one or more of the following: a network topology, network coverage, energy consumption, traffic, a network performance key performance indicator KPI, and a fault and an alarm.

15. The method according to any one of claims 12 to 14, wherein the method further comprises:
sending a first observation request, wherein the first observation request is used to request visualization information of a second twin, and the digital twin network ontology comprises the second twin; and
receiving and displaying the visualization information of the second twin.

16. The method according to any one of claims 12 to 15, wherein the method further comprises:
sending a second create request, wherein the second create request is used to request to create an artificial intelligence AI inference function instance in the physical network, and an AI inference model deployed on the AI inference function instance is used to output an AI inference result.

17. The method according to any one of claims 12 to 16, wherein the digital twin network ontology comprises a third twin, and the third twin is associated with an AI inference function.

18. A first device, comprising a functional unit configured to perform the method according to any one of claims 1 to 11, wherein an action performed by the functional unit is implemented by hardware or by hardware executing corresponding software, and the first device manages a physical network and a digital twin network corresponding to the physical network.

19. A second device, comprising a functional unit configured to perform the method according to any one of claims 12 to 17, wherein an action performed by the functional unit is implemented by hardware or by hardware executing corresponding software.

20. A first device, wherein the first device comprises a processor, and the processor is configured to run a computer program or instructions, or is configured to enable, through a logic circuit, the first device to perform the method according to any one of claims 1 to 11.

21. A second device, wherein the second device comprises a processor, and the processor is configured to run a computer program or instructions, or is configured to enable, through a logic circuit, the second device to perform the method according to any one of claims 12 to 17.

22. A computer-readable storage medium, wherein the computer-readable storage medium comprises instructions, and when the instructions are run, the method according to any one of claims 1 to 11 is implemented.

23. A computer-readable storage medium, wherein the computer-readable storage medium comprises instructions, and when the instructions are run, the method according to any one of claims 12 to 17 is implemented.

24. A computer program product, wherein the computer program product comprises instructions, and when the instructions are run, the method according to any one of claims 1 to 11 is implemented.

25. A computer program product, wherein the computer program product comprises instructions, and when the instructions are run, the method according to any one of claims 12 to 17 is implemented.

26. A system for managing a digital twin network, comprising a first device and a second device, wherein the first device manages a physical network and a digital twin network corresponding to the physical network; and
the first device is configured to perform the management method according to any one of claims 1 to 11; and
the second device is configured to perform the management method according to any one of claims 12 to 17.

27. The management system according to claim 26, wherein the second device comprises a control module, and the control module is configured to control the second device to perform the management method according to any one of claims 12 to 17; and
the first device comprises a management module, and the management module is configured to manage the physical network and the digital twin network corresponding to the physical network, to enable the first device to perform the management method according to any one of claims 1 to 11.

28. The management system according to claim 27, wherein the second device further comprises an observation module, and the observation module is configured to observe at least one twin comprised in a digital twin network ontology.

29. The management system according to claims 27 and 28, wherein the second device further comprises an application module, and the application module is configured to perform analytics based on information about the at least one twin comprised in the digital twin network ontology, to determine first control information.

30. The management system according to claim 29, wherein the application module comprises the observation module.
